(19) Europäisches Patentamt / European Patent Office / Office européen des brevets

(11) **EP 2 418 084 B1**

(12) **EUROPEAN PATENT SPECIFICATION**

(45) Date of publication and mention
of the grant of the patent:
**04.09.2013 Bulletin 2013/36**

(21) Application number: **09843015.0**

(22) Date of filing: **09.04.2009**

(51) Int Cl.:
**B41F 13/20** (2006.01)

(86) International application number:
**PCT/JP2009/057262**

(87) International publication number:
**WO 2010/116505 (14.10.2010 Gazette 2010/41)**

(54) **PRINTING CYLINDER DEVICE AND ROTARY PRINTING PRESS PROVIDED WITH PRINTING CYLINDER DEVICE**

DRUCKZYLINDERVORRICHTUNG UND MIT DER DRUCKZYLINDERVORRICHTUNG VERSEHENE ROTATIONSDRUCKMASCHINE

DISPOSITIF DE CYLINDRE D'IMPRESSION ET PRESSE D'IMPRESSION ROTATIVE ÉQUIPÉE DU DISPOSITIF DE CYLINDRE D'IMPRESSION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.02.2012 Bulletin 2012/07**

(73) Proprietor: **Goss Graphic Systems Japan Corporation**
**Tokyo 105-0001 (JP)**

(72) Inventor: **SUZUKI, Hideaki**
**Sayama-shi**
**Saitama 350-1328 (JP)**

(74) Representative: **Liebetanz, Michael**
**Isler & Pedrazzini AG**
**Gotthardstrasse 53**
**Postfach 1772**
**8027 Zürich (CH)**

(56) References cited:
**EP-A- 0 899 097      WO-A1-2006/123728**
**FR-A- 2 291 402      FR-A1- 2 291 402**
**JP-A- 2007 309 508      JP-B2- 3 554 303**
**JP-T- 2008 514 469      US-A1- 2006 081 140**

**Description**

Technical Field

The present invention relates to a printing cylinder device and a rotary press comprising the printing cylinder device.

Background Art

A general offset press comprises printing cylinders (a plate cylinder, a blanket cylinder, and an impression cylinder), an inking device for transferring ink in a film form to the plate cylinder, and a dampening solution supplier for transferring a predetermined amount of water.
In the offset press, the inking device transfers, to the printing plates which are locked up to the plate cylinders, a necessary amount of ink in a film form delivered for each printing column adapted to an image to be printed. And the dampening solution supplier also supplies water to non-image portions. The ink is then transferred to the blanket cylinder. Further, the ink transferred to the blanket cylinder is transferred to printing paper (hereinafter referred to as "web") fed from a paper feeder. In this way, the image to be printed is printed on one side or both sides of the web.
The above-mentioned printing cylinders are arranged in various forms depending on the kind of printing unit. Now, the arrangement of the printing cylinders is described with reference to the drawings.
FIG. 5 shows a schematic diagram for explaining the arrangement of the printing cylinders according to the present invention.
In FIG. 5(a), a B-B unit is shown. The B-B unit has a pair of horizontally arranged plate cylinders P, and blanket cylinders B disposed for the respective plate cylinders P. Web is fed into a space between the pair of blanket cylinders B.
In FIG. 5(b), a satellite-shaped unit is shown. The satellite-shaped unit has, in its center, an impression cylinder I which has a circumference substantially twice the circumference of the plate cylinder P and the blanket cylinder B. The blanket cylinders B, the
plate cylinders P, an inking device (not shown), and a dampening solution supplier (not shown) are arranged on the circumference of the impression cylinder I. Web is fed to the circumferential surface of the impression cylinder I. This unit is capable of four-color printing on one side.
In FIG. 5(c), a horizontal B-B unit is shown. The horizontal B-B unit has two sets of blanket cylinders B and plate cylinders P that are substantially vertically arranged. Web is fed into a space between the pair of blanket cylinders B. This unit is capable of double-side printing.
In FIG. 5(d), a horizontal unit comprising an impression cylinder is shown. The horizontal unit has one set of a blanket cylinder B and a plate cylinder P that is substantially vertically arranged for one impression cylinder I. Web is fed into a space between the impression cylinder I and the blanket cylinder B. This unit is capable of single-side printing.
FIG. 6 shows a schematic diagram for explaining the arrangement of the printing cylinders in tower units according to the present invention.
In FIG. 6(a), an arch-shaped tower unit is shown. The arch-shaped tower unit has four steps of B-B units shown in FIG. 5(a), and is capable of simultaneous four-color printing on both sides of web.
In FIG. 6(b), an H-shaped unit is shown. The H-shaped unit has four steps of B-B units shown in FIG. 5(a) (the B-B units of the second and fourth steps from the bottom are turned 180°.), and is capable of simultaneous four-color printing on both sides of web.
In each case, ink transferred to the plate cylinder P is transferred to the blanket cylinder B, and the blanket cylinder B prints an image to be printed on the web. In this case, an amount of ink necessary to form the image has to be passed between the plate cylinder P and the blanket cylinder B. The ink also has to be passed from the blanket cylinder B to the web between the blanket cylinders B or between the blanket cylinder B and the impression cylinder I. Thus, the cylinders that are in line contact with each other are uniformly pressurized.
It should be noted that the pressurization force of the plate cylinder P and the blanket cylinder B is referred to as transfer impression. The pressurization force of the blanket cylinders B, or the pressurization force of the blanket cylinder B and the impression cylinder I, that is, the pressurization force to transfer ink to the web is referred to as printing impression.
Meanwhile, in the recent printing industry, there have been demands for improved printing quality, increased printing efficiency, and reduced running costs in a rotary press.
First, regarding the printing quality, there has been developed a technique that allows the transfer impression and the printing impression to be uniform at printable speeds of a press (at any speed from a low-speed range to a high-speed range). This technique is a basic and important technique in offset printing. There have also been developed techniques associated with printing elements for an inking method and a dampening solution supplying method. Moreover, various techniques have been suggested in various fields in connection with the material and structure of a blanket attached to the blanket cylinder, the component of the ink, a dampening solution, and web.

Regarding the increased printing efficiency, there have been developed a technique for increasing the printing speed, and a technique for printing on web which is widened in its the breadth direction as much as the page width of a material to be printed.

For example, in order to increase the printing speed, it is necessary to improve the processing speed of a folder for folding printed web in the final process of the rotary press, and to stabilize a device for guiding the web to the folder after printing and also stabilize tension from a low-speed range to a high-speed range in the traveling process of the web. That is, development of various techniques is demanded.

Regarding the increase of a printable breadth, it is necessary to increase the breadth of the above-mentioned printing cylinder, inking device, and dampening solution supplier. That is, a rotor such as the printing cylinder needs to be increased in length.

For example, if the printing cylinders are increased in length without any change in the support structure of the printing cylinders, the printing cylinders bend, and the respective printing cylinders cannot maintain uniform pressurization force. This causes difficulty in passing a proper amount of ink or dampening solution, and adversely affects the printing quality and the like.

Now, a rotary press according to the present invention is described with reference to the drawings.

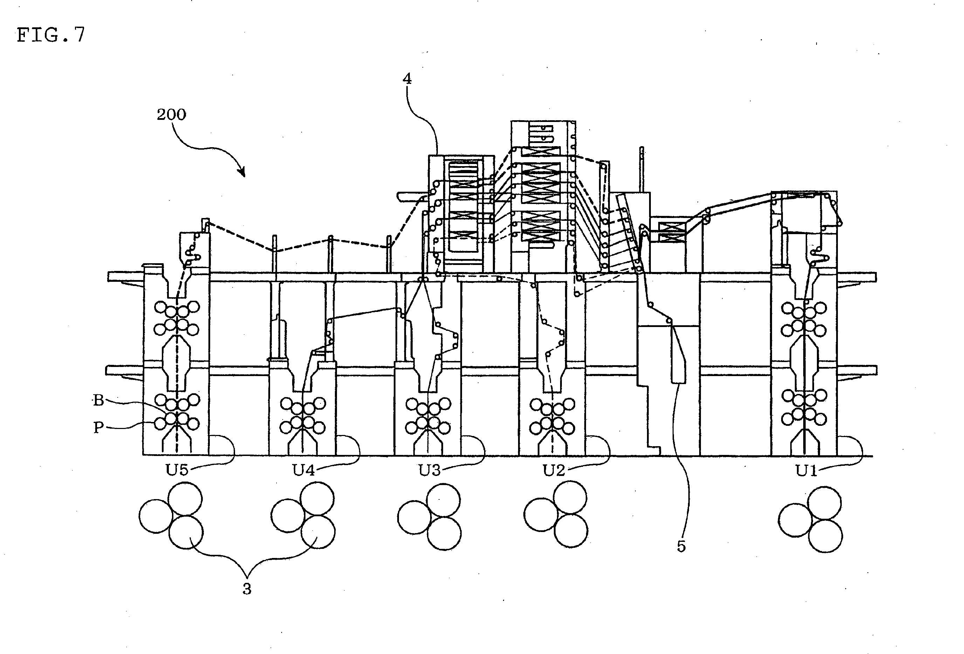

FIG. 7 shows a schematic diagram for explaining the rotary press according to the present invention.

In FIG. 7, the rotary press according to the present invention is a newspaper web offset press 200. This newspaper web offset press 200 comprises a plurality of paper feeders (reel splicer) 3, printing units U1, U2, U3, U4, and U5, a upper structure 4, and a folder 5.

The paper feeders 3 feed web to the printing units U1, U2, U3, U4, and U5 so as to brake a rolled sheet to a certain extent. The respective paper feeders 3 are installed to correspond to the printing units U1, U2, U3, U4, and U5, and supply a generally manufactured rolled sheet having a width equal to four pages of a newspaper to the printing units U1, U2, U3, U4, and U5.

The printing units U1, U2, U3, U4, and U5 print on one surface or both surfaces of the web fed from the paper feeders 3. That is, the printing units U1 and U5 are H-shaped tower units which are capable of simultaneously printing up to four colors on both sides of the web. The printing units U2, U3, and U4 are B-B units which are capable of simultaneously printing up to two colors on both sides of the web.

The upper structure 4 with web guide rollers cuts the printed web (traveling web having a four-page width) in the center of the traveling direction as needed. The upper structure 4 then guides the cut web (traveling web having a two-page width) to the folder 5 in a stacked state in a specified order.

Furthermore, the folder 5 longitudinally folds, into a one-page width, the web (traveling web having a two-page width) which has been stacked by the upper structure 4. The folder 5 then cuts the web into a one-page length, folds the web into the form of a newspaper, and delivers the newspapers.

The newspaper web offset press 200 having the above-described configuration is generally capable of printing, at the maximum, a total of 40 pages including 16 four-color pages and 24 two-color pages.

In the printing units U1, U2, U3, U4, and U5, the blanket cylinder B equipped with the blanket and the plate cylinder P equipped with the printing plates have a lateral size substantially equal to the four-page width of a newspaper, and a circumference equal to two pages of a newspaper in the longitudinal direction.

In the newspaper web offset press 200, the size of a general blanket is equal to the two-page width × two-page length of a newspaper. Two blankets are attached to the blanket cylinder B.

The size of the printing plate attached to the plate cylinder P is generally 1L1W, 1L2W, 2L1W, or 2L2W (note that L is the length (longitudinal length) of one page of a newspaper, and W is the width (lateral length) of one page of a newspaper). Therefore, in order to fill the circumferential surface of the plate cylinder P, for example, eight printing plates are attached when the size of the printing plate is 1L1W, and two printing plates are attached when the size of the printing plate is 2L2W.

In the newspaper web offset press 200, a printing plate for a replacement article may be reattached between the start of printing and the completion of printing. The replacement article may be, for example, an article called a local edition (an article that varies by delivery zone), an article on sports or an election for which the quickness of reporting the progress is important, or a commercial article that varies by delivery zone. When an article is replaced, the printing plate with which the relevant page is being printed is changed, and the printing plate for the replacement article is reattached.

In this case, since the circumference of the plate cylinder P is equal to two pages of a newspaper in its longitudinal direction, two printing plates need to be changed to replace one page of an article. This leads to increased running costs and a heavy burden in printing having a small circulation or in printing that includes frequent plate replacement. Printing efficiency also decreases as the time for replacing two printing plates is longer than the time for replacing one printing plate. Accordingly, there is a demand for a rotary press comprising a printing cylinder device that is equipped with the plate cylinder P having a circumference equal to one page of a newspaper in its longitudinal direction.

If the circumference of the plate cylinder P that does not need the replacement of the printing plate is changed from a length equal to two pages of a newspaper in its longitudinal direction to a length equal to one page of a newspaper in its longitudinal direction, the number of necessary printing plates can be reduced to one from two.

The demand for the plate cylinder P having a circumference equal to one page of a newspaper in its longitudinal direction has arisen from an improvement in the printing durability of recent printing plates. That is, the recent printing plates have a longer life span before image portions (portions to which ink adheres) or non-image portions (portions to which the dampening solution adheres but ink does not adhere) are damaged by the adverse effect of, for example, pressurized contact (contact with the blanket cylinder B, an inking roller, and a dampening solution putting roller), slippage, or paper dust sticking to traveling web. Therefore, development has been made to such a degree that no damage is caused within the normal number of copies printed per set by the newspaper web offset press 200 even if the circumference of the plate cylinder P is equal to one page of a newspaper in its longitudinal direction.

As described above, in the recent printing industry, there have been demands for improved printing quality, increased printing efficiency, and reduced running costs in rotary press. In order to meet these demands, a technique that allows uniform transfer impression and printing impression even when the printing cylinder is rotating at high speed is fundamental and important in the offset printing.

Moreover, reducing the circumference of the plate cylinder P by half is equal to reducing the cylinder diameter by half. According to conventional techniques (e.g. a conventional printing cylinder technique in Patent document 1 described later), bending of the plate cylinder P reaches an amount that cannot be compensated for by a surface rubber layer or a cushion layer of the blanket attached to the blanket cylinder B. That is, it is impossible to obtain uniform pressurization, here, transfer impression between plate cylinder and blanket cylinder that is fundamental in printing quality.

In order to change the foregoing circumstances, various techniques have been developed.

For example, according to the printing cylinder technique disclosed in Patent document 1, a concentric ring-shaped groove is axially pierced from both end faces in a sleeve that supports a journal portion of a printing cylinder. This printing cylinder has an elastic material filling the axially pierced ring-shaped groove.

According to

Japanese Patent Publication Laid-open No. 9-141826

the ends on both sides of a cylinder middle portion of the printing cylinder (a portion corresponding to the ring-shaped groove) deform so as to offset the bending of the axially central portion of the cylinder middle portion, and uniform printing impression is thus obtained in the width direction. On the other hand, the disadvantage of this technique is that if the printing cylinder is rotated at high speed so that the axially central portion of the cylinder middle portion is bent, the printing cylinder bounds because of reaction force of the bending, and uniform pressurization is not obtained. Problems such as increased load on a bearing and the abrasion of the cylinder middle portion caused by the bounding are also conceivable.

A printing cylinder device having the features of the preamble of claim 1 is known from EP 0 899 097. There, in order to facilitate removal and replacement of blanket and impression sleeves in a rotary offset printing press, the blanket and plate cylinders are supported in cantilever fashion.

FR 2 291 402 discloses a method and a device allowing to reduce the bending of printing cylinders through providing free support bearing wherein these bearings are provided inside of the printing cylinder at specific places along the axis of the cylinder.

US 2006-081140 discloses a printing press having inboard cantilevered cylinder including a frame with a drive side spaced from a non-drive side, and a cylinder having an axis and a drive end and a non-drive end to improve the cylinder support.

Furthermore, as described above, there have been demands that improved printing quality, increased printing efficiency, and reduced running costs in rotary press be achieved by a technique that allows uniform transfer impression and printing impression even when the fundamental and important technique in the offset printing, that is, the printing cylinder is rotating at high speed.

Disclosure of the Invention

The present invention has been suggested to solve the problems described above, and is directed to provide a printing cylinder device and a rotary press comprising a printing cylinder device that enable to improve printing quality, to increase printing efficiency, to reduce running costs and the like.

In order to achieve the foregoing object, a printing cylinder device according to the present invention comprises the features of claim 1.

A rotary press comprising a printing cylinder device of the present invention uses the printing cylinder device according to any one of claims 1 to 5 for at least one of a plate cylinder, a blanket cylinder, and an impression cylinder.

According to the printing cylinder device and the rotary press comprising the printing cylinder device of the present invention, improved printing quality, increased printing efficiency, reduced running costs and the like can be achieved.

Brief Description of the Drawings

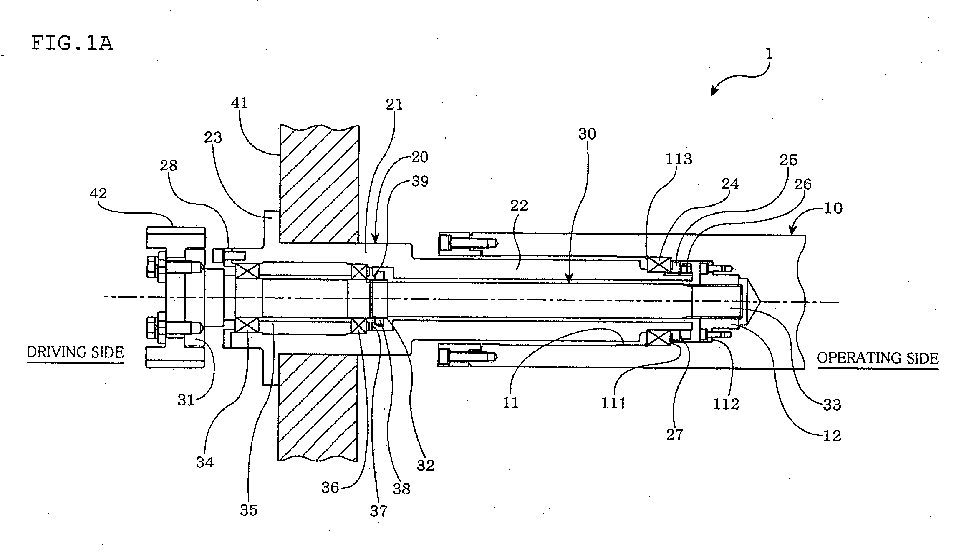

FIG. 1A shows a schematic sectional view of essential parts on the driving side of a printing cylinder device according to a first embodiment of the present invention;

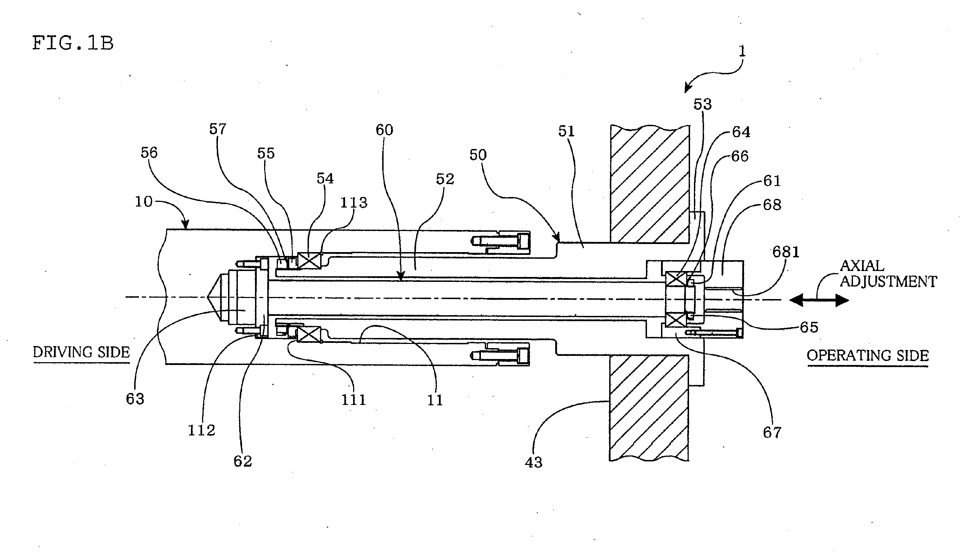

FIG. 1B shows a schematic sectional view of essential parts on the operating side of the printing cylinder device according to the first embodiment of the present invention;

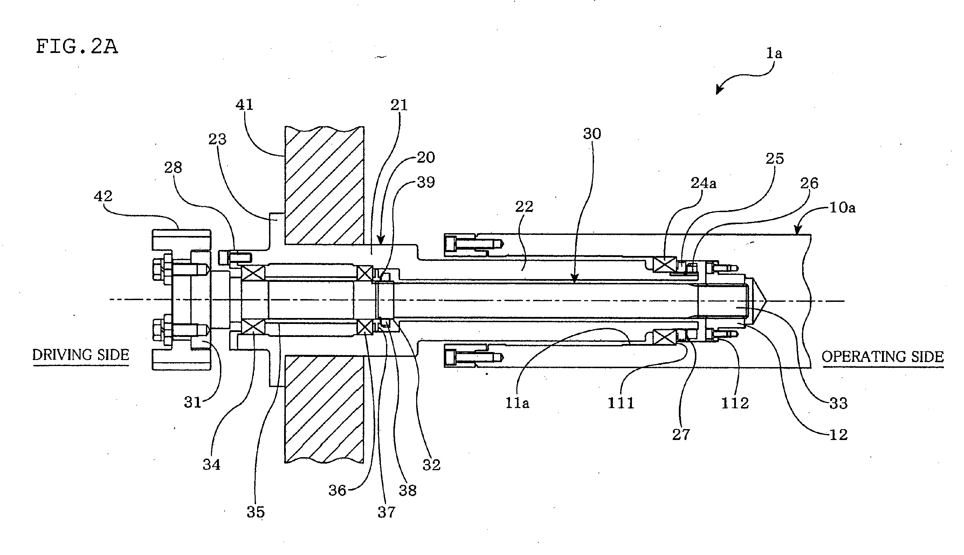

FIG. 2A shows a schematic sectional view of essential parts on the driving side of a printing cylinder device according to a second embodiment of the present invention;

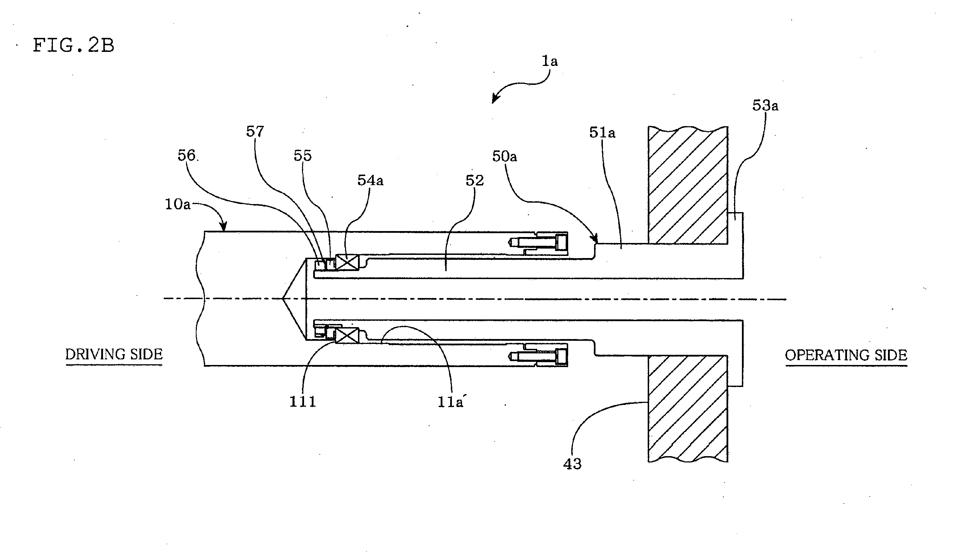

FIG. 2B shows a schematic sectional view of essential parts on the operating side of the printing cylinder device according to the second embodiment of the present invention;

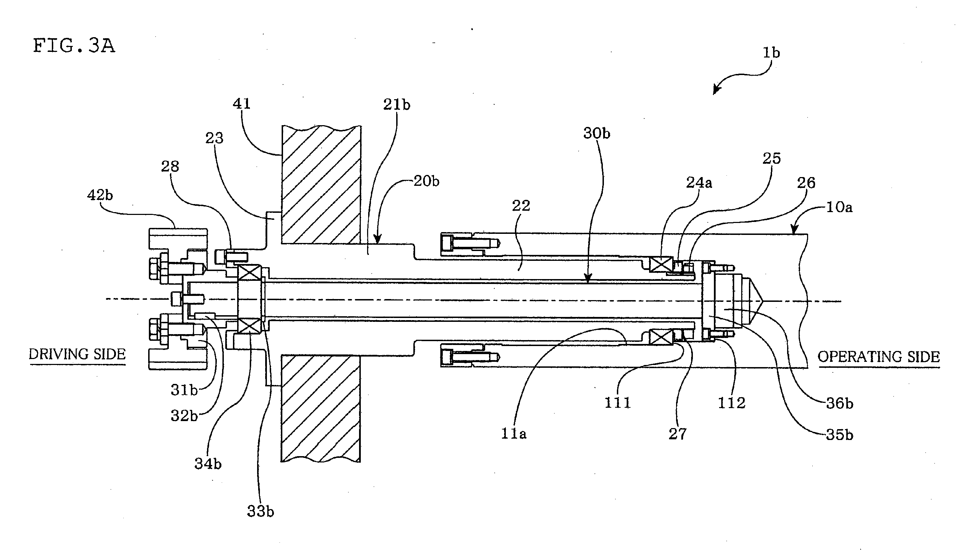

FIG. 3A shows a schematic sectional view of essential parts on the driving side of a printing cylinder device according to a third embodiment of the present invention;

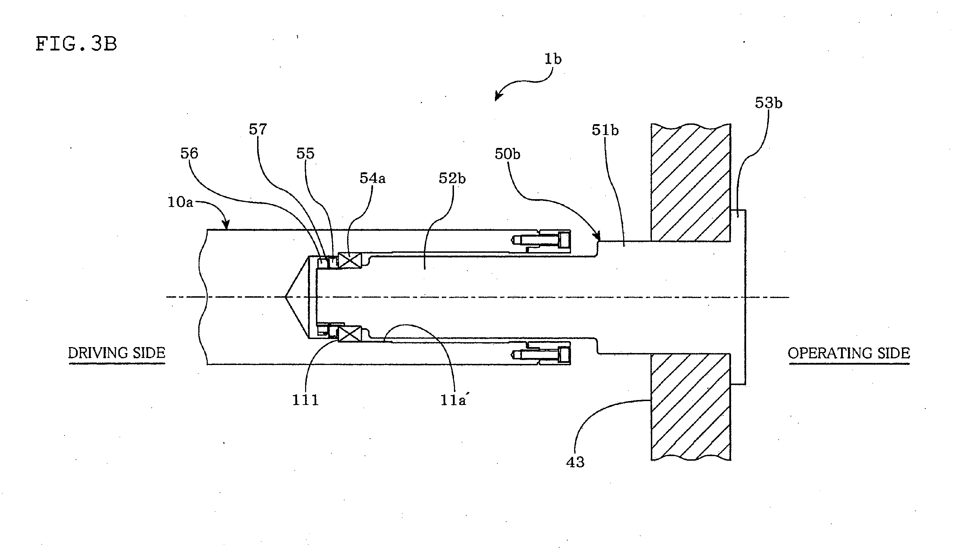

FIG. 3B shows a schematic sectional view of essential parts on the operating side of the printing cylinder device according to the third embodiment of the present invention;

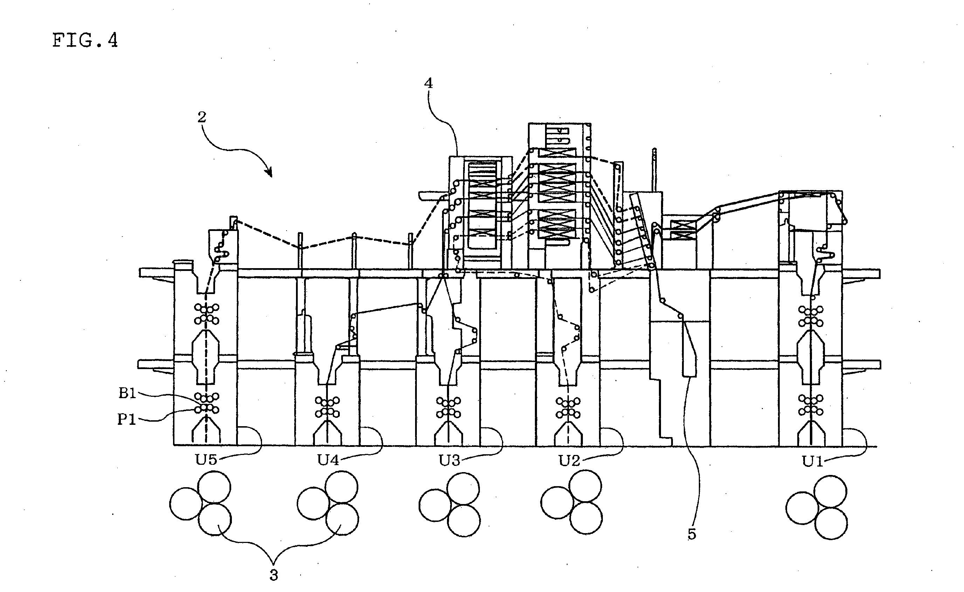

FIG. 4 shows a schematic diagram for explaining a rotary press according to one embodiment of the present invention;

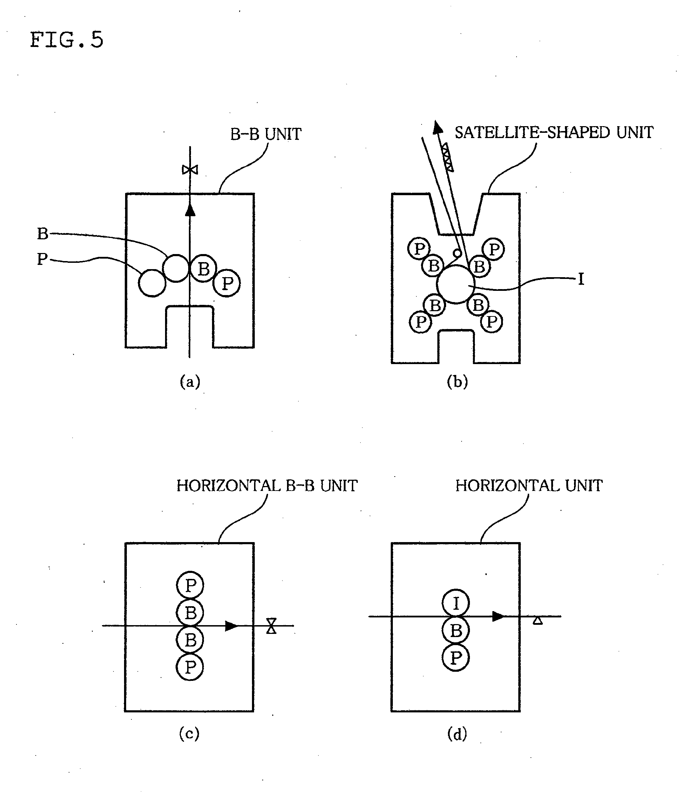

FIG. 5 shows a schematic diagram for explaining the arrangement of printing cylinders according to the present invention;

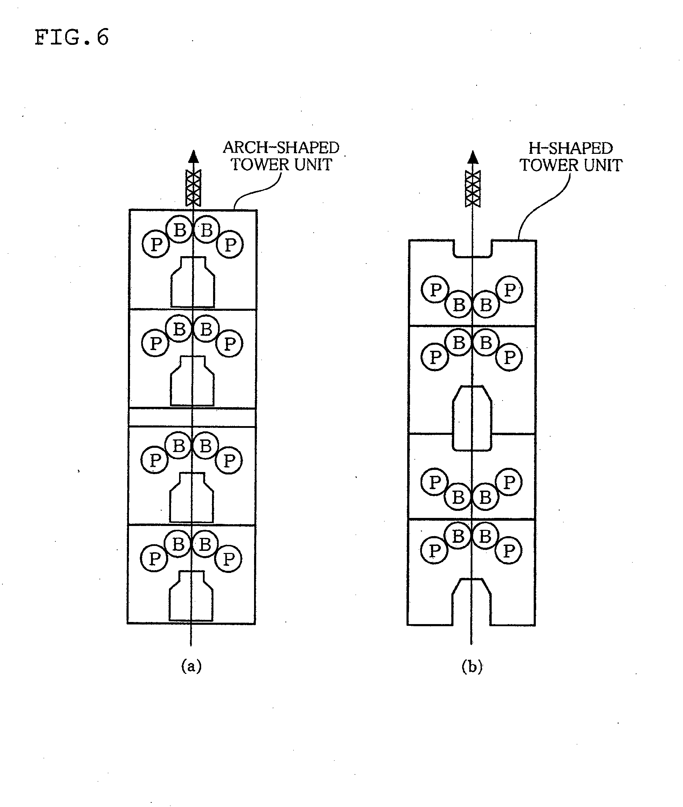

FIG. 6 shows a schematic diagram for explaining the arrangement of printing cylinders in tower units according to the present invention; and

FIG. 7 shows a schematic diagram for explaining the rotary press according to the present invention.

Best Mode for Carrying out the Invention

[First Embodiment of Printing Cylinder Device]

FIG. 1A shows a schematic sectional view of essential parts on the driving side of a printing cylinder device according to a first embodiment of the present invention.

FIG. 1B shows a schematic sectional view of essential parts on the operating side of the printing cylinder device according to the first embodiment of the present invention.

In FIGS. 1A and 1B, a printing cylinder device 1 according to the present embodiment comprises a printing cylinder 10, a driving-side bearing support sleeve 20, a printing cylinder driving shaft 30, an operating-side bearing support sleeve 50, and a printing cylinder position adjusting shaft 60. This printing cylinder device 1 is generally used in place of the above-mentioned plate cylinder P of the newspaper web offset press 200. It is to be noted that printing plate lockup system and the like are not shown in FIGS. 1A and 1B.

Furthermore, the printing cylinder device 1 according to the present embodiment is used in place of the plate cylinder P of the newspaper web offset press 200, but is not limited thereto. That is, the printing cylinder device 1 can be used for a printing cylinder (at least one of a plate cylinder, a blanket cylinder, and an impression cylinder) of a rotary press comprising printing units having various configurations.

(Printing cylinder)

The printing cylinder 10 has an axial size equal to the four-page width of a newspaper, and a circumference equal to one page of a newspaper in its longitudinal direction. Insertion holes 11 having a predetermined depth and steps are pierced in the printing cylinder 10 in both end faces (driving-side end face and operating-side end face) along its central axis.

It should be understood that the two insertion holes 11 are not particularly limited in diameter (diameter at a position corresponding to an insertion portion 22) and depth (depth at a position corresponding to a printing cylinder bearing 24). Although the insertion holes 11 of about the same shape are formed in both end faces of the printing cylinder 10 in the present embodiment, the present invention is not limited thereto. For example, insertion holes 11 of different shapes may be formed.

Furthermore, as shown in FIG. 1A, a middle-stage step 111, a lower step 112, and a fit hole are formed in the driving-side insertion hole 11 in this order toward the inner side of this insertion hole. An outer ring of the printing cylinder bearing 24 comes into contact with the middle-stage step 111. A flange of a drive transmission member 12 is screwed to the lower step 112. The drive transmission member 12 is inserted into the fit hole.

The drive transmission member 12 comprises the above-mentioned flange, and a cylindrical portion. A spline hole as a torque transmitting portion is made in the cylindrical portion to transmit torque to the printing cylinder 10 to which the flange is screwed. The central axis of the spline hole corresponds to the central axis of the printing cylinder 10. Here, if the torque transmitting portion comprises the spline hole and a spline shaft 33, the printing cylinder driving shaft 30 can be easily attached. Since the drive transmission member 12 can axially move when the spline shaft 33 is loaded in the spline hole, the printing cylinder 10 can be axially moved.

Although the torque transmitting portion comprises the axially movable spline hole and spline shaft 33 in the present embodiment, the torque transmitting portion is not limited thereto. For example, an axially movable internal gear, and an external gear fitted to the internal gear may be used.

The outer ring of the driving-side printing cylinder bearing 24 is fitted into collision with the middle-stage step 111 of the driving-side insertion hole 11. A (hole) bearing snap ring 113 is further provided as an axial fixing member for the outer ring of the printing cylinder bearing 24. In a substantially similar manner, the outer ring of an operating-side printing cylinder bearing 54 is fitted into collision with a middle-stage step 111 of the operating-side insertion hole 11. A (hole) bearing snap ring 113 is further provided as an axial fixing member for the outer ring of the printing cylinder bearing 54.

Furthermore, as shown in FIG. 1B, the middle-stage step 111, a lower step 112, and a fit hole are formed in the operating-side insertion hole 11 in this order toward the inner side of this insertion hole. The outer ring of the printing cylinder bearing 54 comes into contact with the middle-stage step 111. A flange portion 62 of the printing cylinder position adjusting shaft 60 is screwed to the lower step 112. A fit portion 63 is inserted into the fit hole.

The flange portion 62 of the printing cylinder position adjusting shaft 60 has a shape substantially similar to the shape of the flange of the drive transmission member 12. The fit portion 63 is in a cylindrical shape having substantially the same outside diameter as that of the cylindrical portion of the drive transmission member 12 and having a small axial length. As described above, this fit portion 63 is inserted into the fit hole located at the end of the insertion hole 11, and the flange portion 62 is thereby screwed to the lower step 112 so that the central axis of the printing cylinder 10 corresponds to the central axis of the printing cylinder position adjusting shaft 60.

(Driving-side bearing support sleeve)

The driving-side bearing support sleeve 20 as a bearing support member comprises a substantially cylindrical attachment portion 21 which is loaded into a boring of a driving-side frame 41, the substantially cylindrical insertion portion 22 inserted into the insertion hole 11 of the printing cylinder 10, and a flange portion 23 formed integrally with the driving side of the attachment portion 21.

The flange portion 23 is screwed to the driving-side frame 41 so that the attachment portion 21 is loaded in the boring of the driving-side frame 41. A predetermined step is formed on the operating side of the inner surface of the attachment portion 21, and an outer ring of a bearing 36 fixed to the printing cylinder driving shaft 30 is fitted into collision with the step. Moreover, an outer ring of a bearing 34 fixed to the printing cylinder driving shaft 30 is fitted into the driving side of the inner surface of the attachment portion 21. The outer ring of the bearing 34 is positioned and fixed by a bearing holder 28 screwed to the end face of the driving side of the attachment portion 21 so that the printing cylinder driving shaft 30 may not come off toward the driving side.

The insertion portion 22 is shaped to be smaller in outside diameter than the attachment portion 21 and to be substantially equal in thickness to the attachment portion 21. The insertion portion 22 is formed integrally with the attachment portion 21. At the end of this insertion portion 22, a predetermined step, an outer circumferential surface, and an external screw are formed to attach an inner ring of the printing cylinder bearing 24.

Here, the driving-side bearing support sleeve 20 is fixed to the driving-side frame 41 so that the central axis of the outer circumferential surface (which is generally lathed and cylindrically ground and is therefore the same as the central axis of the driving-side bearing support sleeve 20) corresponds to the central axis of the printing cylinder 10.

When the correspondence between the central axis of the driving-side bearing support sleeve 20 and the central axis of the printing cylinder 10 is difficult due to the processing condition of the boring of the driving-side frame 41, the attachment portion 21 that comes into contact with the boring of the driving-side frame 41 b can be eccentrically processed a slight distance (e.g. several mm) for adjustment with respect to the central axis of the printing cylinder 10.

The printing cylinder bearing 24 is, for example, a cylindrical roller bearing (without a collar) that allows its outer ring and inner ring to be axially movable or separable relative to each other. For example, an N-shaped cylindrical roller bearing has an inner ring that is provided with a roller and has an outer ring that is axially movable or separable. The inner ring of the printing cylinder bearing 24 is fitted into collision with the step so that the end of the insertion portion 22 is inserted into the inner ring of the printing cylinder bearing 24, and the inner ring of the printing cylinder bearing 24 is then fixed by a bearing lock nut washer 27 and a bearing lock nut 26 via a stepped collar 25.

Thus, the outer ring and inner ring of the printing cylinder bearing 24 are separable. Therefore, the outer ring of the printing cylinder bearing 24 is first fixed by the (hole) bearing snap ring 113, and then the inner ring and roller of the printing cylinder bearing 24 fixed to the insertion portion 22 are inserted into the outer ring of the printing cylinder bearing 24, so that the printing cylinder bearing 24 can be assembled.

The outer ring and inner ring of the printing cylinder bearing 24 are axially movable relative to each other. Therefore, the printing cylinder 10 can axially move a predetermined distance. The printing cylinder bearing 24 only bears a radial load.

The printing cylinder bearing 24 is not exclusively the cylindrical roller bearing, and can be, for example, a bearing such as a needle roller bearing that allows its outer ring and inner ring to be axially movable or separable relative to each other and that can bear a radial load.

(Printing cylinder driving shaft)

The printing cylinder driving shaft 30 has a flange portion 31, an external screw 32, a spline shaft 33 and the like, from the driving side to the operating side. The printing cylinder driving shaft 30 also has a predetermined step in the vicinity of the flange portion 31. The bearing 34 is fitted in until the inner ring comes into collision with this step. Further, a distance collar 35 is fitted in, and then the bearing 36 is fitted in. These components are fixed by a bearing lock nut washer 39 and a bearing lock nut 38 via a stepped collar 37. That is, the bearing lock nut 38 is tightened to the external screw 32.

The bearings 34 and 36 are generally bearings that can bear a radial load and an axial load

The printing cylinder driving shaft 30 to which the bearing 34 and the bearing 36 are attached are inserted into the driving-side bearing support sleeve 20 so that its central axis corresponds to the central axis of the printing cylinder 10. As a result of this insertion, the spline shaft 33 fits into the spline hole of the drive transmission member 12. As described above, the printing cylinder driving shaft 30 is fitted in until the outer ring of the bearing 36 comes into collision with the predetermined step formed in the inner surface of the attachment portion 21, and the outer ring of the bearing 34 fixed to the printing cylinder driving shaft 30 is fitted into the driving side of the inner surface of the attachment portion 21. The outer ring of the bearing 34 is positioned and fixed by the bearing holder 28 screwed to the end face of the driving side of the attachment portion 21 so that the printing cylinder driving shaft 30 may not come off toward the driving side. As a result, the printing cylinder driving shaft 30 is axially positioned.

A printing cylinder driving gear 42 rotationally driven by a driving source (not shown) is screwed to the flange portion 31 of the printing cylinder driving shaft 30 projecting to the driving side of the driving-side frame 41. The printing cylinder driving gear 42 has the attachment holes. Since each of the attachment holes of the printing cylinder driving gear 42 is an arc-shaped long hole into which a fixing bolt is inserted and which corresponds to the central axis of the printing cylinder driving gear 42, the circumferential position of the printing cylinder 10 can be adjusted.

The driving source may be obtained by a gear train from a general motor. Alternatively, the printing cylinder driving gear 42 may be replaced with a bevel gear, and the corresponding bevel gear may be attached to and engaged with the end of a motor (not shown) and directly driven by the motor.

(Operating-side bearing support sleeve)

The operating-side bearing support sleeve 50 as a bearing support member comprises a substantially cylindrical attachment portion 51 which is loaded into a boring of an operating-side frame 43, a substantially cylindrical insertion portion 52 inserted into the insertion hole 11 of the printing cylinder 10, and a flange portion 53 formed integrally with the operating side of the attachment portion 51.

The flange portion 53 is screwed to the operating-side frame 43 so that the attachment portion 51 is loaded into the boring of the operating-side frame 43. A loading hole for loading, for example, a bearing holder 67 is pierced in the flange portion 53 and the attachment portion 51 from the operating side. The bearing holder 67 and a bearing holder 68 are axially movably loaded into this loading hole. The bearing holder 67 holds an outer ring of a bearing 64 having its inner ring fixed to the printing cylinder position adjusting shaft 60 by a bearing lock nut 65. The bearing holder 68 is screwed to the bearing holder 67.

An internal screw 681 is formed in the end face of the bearing holder 68. The bearing holder 67 and the bearing holder 68 can be axially moved by using the internal screw 681. Although not shown, this moving means may use, for example, a position adjusting bolt that is supported in an axially immobile state. As a result, if the position adjusting bolt is screwed (rotated clockwise) to the internal screw 681, the bearing holder 67 and the bearing holder 68 move to the operating side. If the position adjusting bolt is loosened (rotated counterclockwise), the bearing holder 67 and the bearing holder 68 move to the driving side. That is, if the position adjusting bolt is tightened or loosened, the printing cylinder position adjusting shaft 60 moves to the driving side or the operating side (in the lateral directions of FIGS. 1A and 1B), and the printing cylinder 10 is moved.

The above-mentioned moving means is not exclusively configured to use the position adjusting bolt, and, for example, may be configured to use a cylinder for moving the bearing holder 68. Alternatively, the moving means may be configured to be remotely controllable by using a stepping motor for rotating the position adjusting bolt.

The insertion portion 52 is shaped to be smaller in outside diameter than the attachment portion 51. The insertion portion 52 is formed integrally with the attachment portion 51. At the end of this insertion portion 52, a predetermined step, an outer circumferential surface, and an external screw are formed to attach an inner ring of the printing cylinder bearing 54.

Here, the operating-side bearing support sleeve 50 is fixed to the operating-side frame 43 so that the central axis of the outer circumferential surface (which is generally lathed and cylindrically ground and is therefore the same as the central axis of the operating-side bearing support sleeve 50) corresponds to the central axis of the printing cylinder 10.

As described above, when the correspondence between the central axis of the operating-side bearing support sleeve 50 and the central axis of the printing cylinder 10 is difficult due to the processing condition of the boring of the operating-side frame 43, the attachment portion 51 that comes into contact with the boring of the operating-side frame 43 can be eccentrically processed a slight distance (e.g. several mm) for adjustment with respect to the central axis of the printing cylinder 10.

The printing cylinder bearing 54 is substantially similar to the above-mentioned printing cylinder bearing 24 and is, for example, a cylindrical roller bearing (without a collar) that allows its outer ring and inner ring to be axially movable or separable relative to each other.

The inner ring of the printing cylinder bearing 54 is fitted into collision with the step so that the end of the insertion portion 52 is inserted into the inner ring of the printing cylinder bearing 54, and inner ring of the printing cylinder bearing 54 is then fixed by a bearing lock nut washer 57 and a bearing lock nut 56 via a stepped collar 55.

Thus, the outer ring and inner ring of the printing cylinder bearing 54 are separable. Therefore, the outer ring of the printing cylinder bearing 54 is first fixed by the (hole) bearing snap ring 113, and then the inner ring and roller of the printing cylinder bearing 54 fixed to the insertion portion 52 are inserted into the outer ring of the printing cylinder bearing 54, so that the printing cylinder bearing 54 can be assembled. As described later, after the printing cylinder position adjusting shaft 60 is attached to the printing cylinder 10, the outer ring of the printing cylinder bearing 54 is fitted into collision with the middle-stage step 111 of the operating-side insertion hole 11, and fixed by the (hole) bearing snap ring 113.

The outer ring and inner ring of the printing cylinder bearing 54 are axially movable relative to each other. Therefore, the printing cylinder 10 can axially move a predetermined distance. The printing cylinder bearing 54 only bears a radial load.

The printing cylinder bearing 54 is not exclusively the cylindrical roller bearing, and can be, for example, a bearing such as a needle roller bearing that allows its outer ring and inner ring to be axially movable or separable relative to each other and that can bear a radial load.

(Printing cylinder position adjusting shaft)

The printing cylinder position adjusting shaft 60 has the flange portion 62 and the fit portion 63 that are formed at the driving-side end, and has an external screw 61 and the like that are formed at the operating-side end.

The fit portion 63 is cylindrical, and is inserted in the fit hole of the operating-side insertion hole 11. The flange portion 62 is screwed to the lower step 112. The flange portion 62 is screwed before the insertion portion 52 is inserted into the insertion hole 11. At this point, since the fit portion 63 functions as a positioning portion, the printing cylinder position adjusting shaft 60 is attached to the printing cylinder 10 so that its central axis corresponds to the central axis of the printing cylinder 10. The printing cylinder position adjusting shaft 60 is inserted into the insertion hole 11 before the printing cylinder 10 is positioned at a predetermined boring.

In the present embodiment, after the printing cylinder position adjusting shaft 60 is attached to the printing cylinder 10, the outer ring of the printing cylinder bearing 54 is then fitted into collision with the middle-stage step 111 of the operating-side insertion hole 11, and fixed by the (hole) bearing snap ring 113.

Furthermore, the printing cylinder position adjusting shaft 60 is positioned substantially in the center of the boring of the operating-side frame 43. In this condition, the insertion portion 52 of the operating-side bearing support sleeve 50 is inserted into the insertion hole 11 via the boring of the operating-side frame 43, and the operating-side bearing support sleeve 50 is fixed to the operating-side frame 43. As a result, the inner ring and outer ring of the printing cylinder bearing 54 are engaged, and the printing cylinder bearing 54 bears the printing cylinder 10.

The printing cylinder position adjusting shaft 60 has, in the vicinity of the external screw 61, a predetermined step with which an inner ring of the bearing 64 comes into collision.

Here, the procedure for attaching the bearing 64 is described.

First, the outer ring of the bearing 64 is fitted into the bearing holder 67, and the bearing holder 67 to which the bearing 64 is attached is then fitted into a loading hole of the attachment portion 51. Further, the bearing holder 67 to which the bearing 64 is attached is loaded into the loading hole of the attachment portion 51 until the inner ring of the bearing 64 comes into collision with the predetermined step located in the vicinity of the external screw 61. The inner ring of the bearing 64 is then fixed by a bearing lock nut washer 66 and the bearing lock nut 65, and the bearing holder 68 is screwed to the bearing holder 67.

The bearing 64 is generally a bearing that can bear a radial load and an axial load.

Now, the operation of the printing cylinder device 1 having the above configuration and others are described.

First, a drive motor (not shown) transmits torque to the printing cylinder driving gear 42 via the gear train or directly. The printing cylinder driving shaft 30 then rotates, and the spline shaft 33 transmits the received torque to the drive transmission member 12. The printing cylinder driving shaft 30 is supported by the bearings 34 and 36, can bear a radial load and an axial load, and does not axially move.

When the torque is transmitted to the drive transmission member 12, the printing cylinder 10 rotates.

The printing cylinder 10 is supported by the printing cylinder bearing 24, the printing cylinder bearing 54, and the bearing 64. That is, the printing cylinder bearing 24 and the printing cylinder bearing 54 can only bear a radial load, and the bearing 64 can bear an axial load (and a radial load).

In the present embodiment, the bearings 34, 36 and 64 can also support the radial load of the printing cylinder 10. Moreover, the bearings 34 and 36 can support an axial load when the printing cylinder 10 is axially moved.

Here, the printing cylinder device 1 is not limited to the configuration in which the two bearings, that is, the printing cylinder bearing 24 and the printing cylinder bearing 54 bear the radial load of the printing cylinder 10. For example, the printing cylinder device 1 may have a configuration in which one or two or more printing cylinder bearings 24 are further provided on the driving side of the printing cylinder bearing 24 and one or two or more printing cylinder bearings 54 are further provided on the operating side of the printing cylinder bearing 54. This allows further inhibition of the bending of the printing cylinder 10, and thus enables a further speed increase and a greater length of the printing cylinder 10. Moreover, printing quality in high-speed printing can be improved.

The newly added bearings are generally the same bearings as the printing cylinder bearing 24 and the printing cylinder bearing 54, but are not limited thereto. For example, bearings greater in size than the printing cylinder bearing 24 and the printing cylinder bearing 54 may be used.

The configuration according to the present embodiment comprises one bearing 64, but is not limited thereto. For example, bearings may be provided at two places in a substantially similar manner as the bearing 34 and the bearing 36 of the printing cylinder driving shaft 30. This makes it possible to bear a higher axial load (and radial load).

Furthermore, the printing cylinder device 1 according to the present embodiment comprises the printing cylinder position adjusting shaft 60, the bearing 64, the bearing holder 67, and the bearing holder 68, and can thereby axially move the printing cylinder 10. That is, when the axial movement of the printing cylinder 10 needs to be adjusted, the bearing holder 67 and the bearing holder 68 move to the operating side if the above-mentioned position adjusting bolt is tightened (rotated clockwise) to the internal screw 681, and the bearing holder 67 and the bearing holder 68 move to the driving side if the position adjusting bolt is loosened (rotated counterclockwise). Thus, the axial position of the printing cylinder 10 coupled to the printing cylinder position adjusting shaft 60 is adjusted.

Now, the bending amount of the printing cylinder 10 in the printing cylinder device 1 is described.

During printing, the surface of the printing cylinder 10 is pressurized by printing impression and transfer impression substantially in the form of line contact, and the printing cylinder 10 is bent by the impression.

$$\text{Maximum bending amount} = (5/384) \times W \times L^4 / EI \quad \text{Equation (1)}$$

In Equation (1), W is a uniformly distributed load, L is an inter-bearing distance, and EI is flexural rigidity.

According to Equation (1), the inter-bearing distance L is the major factor for the structural factor associated with the bending of the printing cylinder 10.

The flexural rigidity EI is a factor associated with the diameter (outside diameter), length, and material of the printing cylinder 10. However, the outside diameter and length of the printing cylinder 10 in the rotary press comprising the printing cylinder device are related to a printed matter size. For example, in the case of Japanese newspaper, since the longitudinal one-page length is 546 mm, the outside diameter of the printing cylinder 10 is about 546 /$\pi$mm, and since the lateral four-page width is 1626 mm, the length of the printing cylinder 10 is about 1740 mm. A generally used material is cast steel or stainless steel. The use of some other highly rigid material such as titanium steel leads to a significant cost increase.

In the printing cylinder device 1, the printing cylinder bearing 24 is attached to the end of the driving-side bearing support sleeve 20, the printing cylinder bearing 54 is attached to the end of the operating-side bearing support sleeve 50, and the driving-side bearing support sleeve 20 and the operating-side bearing support sleeve 50 are inserted into the insertion hole 11. Therefore, L (inter-bearing distance) can be effectively reduced. That is, when the printing cylinder 10 of the printing cylinder device 1 is a plate cylinder, the maximum bending amount can be inhibited to a degree that can be absorbed by the rubber layer or cushion layer of the uniform blanket even if the printing cylinder 10 is rotated to a maximum speed range in a pressurized state. Thus, uniform transfer impression that is fundamental in printing quality can be ensured for the blanket cylinder (not shown).

The driving-side bearing support sleeve 20 and the operating-side bearing support sleeve 50 project a predetermined length from the driving-side frame 41 and the operating-side frame 43, and are slightly bent. However, the driving-side bearing support sleeve 20 and the operating-side bearing support sleeve 50 are fixed to the driving-side frame 41 and the operating-side frame 43 and do not rotate, and are therefore kept slightly bent and have no adverse effect on the bending of the printing cylinder 10.

Regarding printing efficiency, the printing cylinder 10 of the printing cylinder device 1 has an axial size substantially equal to the four-page width of a newspaper, and a circumference equal to one page of a newspaper in its longitudinal direction, so that the number of produced printing plates attached to the plate cylinder can be reduced by half. Even when the printing plate is frequently changed, the time for producing and replacing the printing plate can be reduced, and running costs can be reduced.

Furthermore, the printing cylinder device 1 is also suitably applicable to the printing cylinder 10 for printing increased in breadth.

As described above, according to the printing cylinder device 1 in the present embodiment, even when high-speed printing is performed, high printing quality can be achieved, and printing efficiency can be improved including a one-page to two-page increase of a printable range in the breadth direction. Moreover, it is possible to reduce running costs by reducing, by half, replacement printing plates or printing plates that do not need to be replaced during a plate change.

Furthermore, the printing cylinder device 1 according to the present embodiment has various applications.

For example, although the printing cylinder device 1 according to the present embodiment is configured to rotate the printing cylinder 10 by using, for example, the printing cylinder driving shaft 30, the present invention is not limited thereto.

[Second Embodiment of Printing Cylinder Device]

FIG. 2A shows a schematic sectional view of essential parts on the driving side of a printing cylinder device according to a second embodiment of the present invention.

FIG. 2B shows a schematic sectional view of essential parts on the operating side of the printing cylinder device according to the second embodiment of the present invention.

A printing cylinder device 1a according to the present embodiment in FIGS. 2A and 2B is different from the printing cylinder device 1 according to the first embodiment described above in that no printing cylinder position adjusting shaft 60 is provided and so on. The configuration according to the present embodiment is substantially similar in other respects to the configuration of the printing cylinder device 1

Accordingly, components in FIGS. 2A and 2B similar to those in FIGS. 1A and 1B are given the same signs, and are not described in detail.

Although the printing cylinder device 1a according to the present embodiment and a later-described printing cylinder device 1b are used in place of a blanket cylinder B of a newspaper web offset press 200, but the present invention is not limited thereto. That is, the printing cylinder devices 1a and 1b can be used for a printing cylinder (at least one of a plate cylinder (a plate cylinder that does not need to be axially moved, e.g., a plate cylinder for printing in black), a blanket cylinder, and an impression cylinder) of a rotary press comprising printing units having various configurations.

As shown in FIG. 2A, in contrast with the first embodiment, an insertion hole 11a, which is not grooved for attaching a (hole) bearing snap ring 113, is formed on the driving side of a printing cylinder 10a, and the insertion hole 11a is supported by a printing cylinder bearing 24a.

The printing cylinder bearing 24a is, for example, a cylindrical roller bearing (with a collar) that can bear a radial load and an axial load. For example, an NUP-shaped cylindrical roller bearing does not allow its outer ring and inner ring to be separated if the inner ring is fixed. That is, the outer ring of the NUP-shaped cylindrical roller bearing is loaded into the insertion hole 11a so that the inner ring and a loose rib are fixed to a driving-side bearing support sleeve 20 by a stepped collar 25 and a bearing lock nut 26.

As shown in FIG. 2B, in contrast with the first embodiment, on the operating side of the printing cylinder 10a, an insertion hole 11a' which is not processed for fixing the end of the printing cylinder position adjusting shaft 60 and which is not grooved for attaching the (hole) bearing snap ring 113 is formed, and supported by a printing cylinder bearing 54a.

The printing cylinder bearing 54a is, for example, a cylindrical roller bearing (with a collar) that can bear a radial load and an axial load. For example, an NUP-shaped cylindrical roller bearing does not allow its outer ring and inner ring to be separated if the inner ring is fixed. That is, the outer ring of the NUP-shaped cylindrical roller bearing is loaded into the insertion hole 11a' so that the inner ring and a loose rib are fixed to an operating-side bearing support sleeve 50a by a stepped collar 55 and a bearing lock nut 56.

Thus, in the present embodiment, the printing cylinder 10a is supported by the above-mentioned printing cylinder bearings 24a and 54a, and thereby rotates at an axial predetermined position.

The printing cylinder bearing 24a and the printing cylinder bearing 54a are not exclusively the NUP-shaped cylindrical roller bearings. A bearing such as a conical roller bearing or a combination of these bearings can be used as the printing cylinder bearings.

In contrast with the first embodiment, the operating-side bearing support sleeve 50a is configured so that no loading hole for loading, for example, a bearing holder 67 is pierced in a flange portion 53a and an attachment portion 51a. The configuration and operation of the printing cylinder device 1a according to the present embodiment are substantially similar in other respects to those according to the first embodiment.

As described above, the printing cylinder device 1a according to the present embodiment is applicable to the printing cylinder 10a that does not need positional adjustment in a suitable manner (in such a manner as to reduce the manufacturing costs). Even when high-speed printing is performed, high printing quality can be achieved, and printing efficiency can be improved including a one-page to two-page increase of a printable range in the breadth direction. Moreover, the printing cylinder 10a has an axial size substantially equal to the four-page width of a newspaper, and a circumference equal to one page of a newspaper in its longitudinal direction, so that the size of the blanket can be reduced.

Furthermore, the printing cylinder 10a used in the present embodiment is not grooved for attaching the (hole) bearing snap ring 113, and is not processed for fixing the end of the printing cylinder position adjusting shaft 60. However, the printing cylinder 10a is not limited thereto. For example, the printing cylinder 10 can be used instead of the printing cylinder 10a, and common parts can be used for the printing cylinders.

Moreover, the operating-side bearing support sleeve 50 can be used instead of the operating-side bearing support sleeve 50a. Thus, by replacing the printing cylinder bearings 24a and 54a with the printing cylinder bearings 24 and 54 and providing, for example, the printing cylinder position adjusting shaft 60, the fixed printing cylinder (printing cylinder 10a) can be easily changed to the movable printing cylinder (printing cylinder 10).


[Third Embodiment of Printing Cylinder Device]

FIG. 3A shows a schematic sectional view of essential parts on the driving side of a printing cylinder device according to a third embodiment of the present invention.

FIG. 3B shows a schematic sectional view of essential parts on the operating side of the printing cylinder device according to the third embodiment of the present invention.

A printing cylinder device 1b according to the present embodiment in FIGS. 3A and 3B is different from the printing cylinder device 1a according to the second embodiment in that a printing cylinder driving shaft 30b is provided instead of the printing cylinder driving shaft 30 and so on. The configuration according to the present embodiment is substantially similar in other respects to the configuration of the printing cylinder device 1a.

Accordingly, components in FIGS. 3A and 3B similar to those in FIGS. 2A and 2B are given the same signs, and are not described in detail.

As shown in FIG. 3A, a flange portion 31 b is screwed to the driving-side end of the printing cylinder driving shaft 30b via a key 32b. A printing cylinder driving gear 42b having an opening in the center is screwed to the driving-side end face of the flange portion 31b. The flange portion 31b has a stepped collar portion on its operating side. The end face of this stepped collar portion comes into contact with an inner ring of a bearing 34b.

The bearing 34b is, for example, an angular ball bearing. An inner ring of the bearing 34b is fixed to the printing cylinder driving shaft 30b by a (shaft) bearing snap ring 33b and the stepped collar portion. An outer ring of the bearing 34b is fixed to a driving-side bearing support sleeve 20b by a step of an attachment portion 21 b and a bearing holder 28.

At the operating-side end of the printing cylinder driving shaft 30b, a fit portion 36b and a flange portion 35b substantially similar in configuration to the fit portion 63 and the flange portion 62 of the printing cylinder position adjusting shaft 60 described above are formed. The fit portion 36b is cylindrical, and is inserted into a fit hole of the insertion hole 11a. The flange portion 35b is screwed to a lower step 112.

The attachment portion 21b of the driving-side bearing support sleeve 20b has a shape corresponding to the bearing 34b, and the driving-side bearing support sleeve 20b is substantially similar in other respects to the driving-side bearing support sleeve 20.

The flange portion 35b of the printing cylinder driving shaft 30b having the above-described configuration is first screwed to a printing cylinder 10a, and then the driving-side bearing support sleeve 20b is inserted into the insertion hole 11a, and the printing cylinder 10a is supported by a printing cylinder bearing 24a.

Further, the (shaft) bearing snap ring 33b is attached, and then the bearing 34b is loaded in, and the outer ring of the bearing 34b is fixed to the driving-side bearing support sleeve 20b by the bearing holder 28.

Moreover, the flange portion 31b is screwed to the printing cylinder driving shaft 30b via the key 32b, and then the printing cylinder driving gear 42b is screwed thereto.

As described above, according to the present embodiment, the printing cylinder driving shaft 30b and the driving-side bearing support sleeve 20b are used, such that complex machining such as spline processing is not needed, and the number of components can be reduced, thereby enabling the reduction of manufacturing costs.

As shown in FIG. 3B, an operating-side bearing support sleeve 50b according to the present embodiment is configured to have an attachment portion 51b, an insertion portion 52b, and a flange portion 53b in which no through-hole is formed. This eliminates machining for the through-hole and enables the reduction of manufacturing costs. The configuration and operation of the printing cylinder device 1b according to the present embodiment are substantially similar in other respects to those according to the second embodiment.

As described above, according to the printing cylinder device 1b in the present embodiment, manufacturing costs can be reduced by a significant reduction in machining costs. Even when high-speed printing is performed, high printing quality can be achieved, and printing efficiency can be improved including a one-page to two-page increase of a printable range in the breadth direction.

[One embodiment of rotary press comprising printing cylinder device]

The present invention is also effective as an invention of a rotary press comprising a printing cylinder device. FIG. 4 shows a schematic diagram for explaining the rotary press according to one embodiment of the present invention. A newspaper web offset press 2 according to the present embodiment is different from the above-described newspaper web offset press 200 in that blanket cylinders B1 and plate cylinders P1 comprising printing cylinder devices 1, 1a, or 1b are provided instead of the blanket cylinders B and the plate cylinders P of the printing units U1, U2, U3, U4, and U5. The configuration according to the present embodiment is substantially similar in other respects to the configuration of the newspaper web offset press 200.

Accordingly, components in FIG. 4 similar to those in FIG. 7 are given the same signs, and are not described in detail.

The newspaper web offset press 2 according to the present embodiment is provided with the plate cylinders P1 comprising the printing cylinder devices 1 instead of the plate cylinders P of the printing units U2, U3, and U4, and the blanket cylinders B1 comprising the printing cylinder devices 1b instead of the blanket cylinders B of the printing units U2, U3, and U4.

Although the blanket cylinders B1 comprising the printing cylinder devices 1b are provided in the printing units U2, U3, and U4, the present invention is not limited thereto. For example, blanket cylinders B1 comprising the printing cylinder devices 1a may be provided in the printing units U2, U3, and U4.

The newspaper web offset press 2 is provided with the plate cylinders P1 comprising the printing cylinder devices 1 instead of the plate cylinders P of the printing units U1 and U5, and the blanket cylinders B1 comprising the printing cylinder devices 1a instead of the blanket cylinders B of the printing units U1 and U5.

Although the plate cylinders P1 (eight plate cylinders P1 for each printing unit) comprising the printing cylinder devices 1 are provided in the printing units U1 and U5, the present invention is not limited thereto. For example, plate cylinders P1 comprising the printing cylinder devices 1a may be provided in reference cylinders (plate cylinders for printing in black) of the printing units U1 and U5.

Although the blanket cylinders B1 comprising the printing cylinder devices 1a are provided in the printing units U1 and U5, the present invention is not limited thereto. For example, blanket cylinders B1 comprising the printing cylinder devices 1b may be provided in the printing units U1 and U5.

As described above, the blanket cylinders B1 and the plate cylinders P1 comprising printing cylinder devices 1, 1a, or 1b are provided. Thus, a maximum bending amount can be inhibited to a degree that can be absorbed by a rubber layer or cushion layer of the uniform blanket even if the blanket cylinders B1 and the plate cylinders P1 are rotated to a maximum speed range in a pressurized state. Thus, transfer impression and printing impression that are fundamental in printing quality can be ensured.

Regarding printing efficiency, printing cylinders 10 and 10a of the blanket cylinders B1 and the plate cylinders P1 have an axial size substantially equal to the four-page width of a newspaper, and a circumference equal to one page of a newspaper in its longitudinal direction, so that the number of produced printing plates attached to the plate cylinder can be reduced by half. Even when the printing plate is frequently changed, the time for producing and replacing the printing plate can be reduced, and running costs can be reduced.

Furthermore, the blanket cylinders B1 and the plate cylinders P1 are also suitably applicable to the printing cylinders 10 and 10a for printing increased in breadth.

As described above, according to the newspaper web offset press 2 in the present embodiment, even when high-speed printing is performed, high printing quality can be achieved, and printing efficiency can be improved including a one-page to two-page increase of a printable range in the breadth direction. Moreover, it is possible to reduce running costs by reducing, by half, replacement printing plates or printing plates that do not need to be replaced during a plate change.

In the newspaper web offset press 2, the circumference of the printing cylinders 10 and 10a of the blanket cylinders B1 and the plate cylinders P1 is equal to one page of a newspaper in its longitudinal direction, but is not limited thereto. For example, the circumference of the printing cylinder 10a of the blanket cylinder B1 may be equal to two pages of a newspaper in its longitudinal direction. The axial position of the blanket cylinder B1 does not need to be adjusted whether the circumference of the printing cylinder 10a is equal to one page or two pages of a newspaper in its longitudinal direction.

Although not shown, when the newspaper web offset press 2 uses an impression cylinder, the newspaper web offset press 2 generally comprises a blanket cylinder B1 having a circumference equal to one page of a newspaper in its longitudinal direction, a plate cylinder P1 having a circumference equal to one page of a newspaper in its longitudinal direction, and an impression cylinder having a circumference equal to two pages of a newspaper in its longitudinal direction.

While the preferred embodiments and so on of the printing cylinder device and the rotary press comprising the printing cylinder device according to the present invention have been shown and described, the printing cylinder device and the rotary press comprising the printing cylinder device according to the present invention are not limited to the embodiments and so on described above. It should be understood that various modifications can be made within the scope of the present invention.

For example, the printing cylinder 10 of the printing cylinder device 1 has been described as a plate cylinder, but is also applicable to structures for other printing cylinders or a rotary cylinder that needs the inhibition of bending.

[Description of Reference Numbers]

    1, 1a, 1b: printing cylinder device
    2, 200: newspaper web offset press
    3: paper feeder (reel splicer)
    4: upper structure
    5: folder
    10, 10a: printing cylinder
    11, 11 a, 11 a': insertion hole
    12: drive transmission member
    20, 20b: driving-side bearing support sleeve
    21, 21b: attachment portion
    22: insertion portion
    23: flange portion
    24, 24a: printing cylinder bearing
    25: stepped collar
    26: bearing lock nut
    27: bearing lock nut washer
    28: bearing holder
    30, 30b: printing cylinder driving shaft
    31, 31b: flange portion
    32: external screw
    32b: key
    33: spline shaft
    33b: (shaft) bearing snap ring
    34, 34b: bearing
    35: distance collar
    35b: flange portion
    36: bearing
    36b: fit portion
    37: stepped collar
    38: bearing lock nut
    39: bearing lock nut washer
    41: driving-side frame
    42, 42b: printing cylinder driving gear
    43: operating-side frame
    50, 50a: operating-side bearing support sleeve
    51, 51 a: attachment portion
    52: insertion portion
    53, 53a: flange portion

54, 54a: printing cylinder bearing

55: stepped collar

56: bearing lock nut

57: bearing lock nut washer

60: printing cylinder position adjusting shaft

61: external screw

62: flange portion

63: fit portion

64: bearing

65: bearing lock nut

66: bearing lock nut washer

67: bearing holder

68: bearing holder

111: middle-stage step

112: lower step

113: (hole) bearing snap ring

681: internal screw

B, B1: blanket cylinder

P, P1: plate cylinder

U1, U2, U3, U4, U5: printing unit

**Claims**

1. A printing cylinder device (1) **characterized by** comprising:

   - a printing cylinder (10) having insertion holes (11) formed in both end faces thereof;
   - a driving-side bearing support member (20) having an insertion portion (22) inserted in one of the insertion holes (11) and an attachment portion (21) fixed to a frame (41); and
   - a driving-side printing cylinder bearing (24) which is provided on at least the end of the insertion portion (22) of the driving-side bearing support member (20) and which rotatably supports the printing cylinder (10); wherein the driving-side bearing support member (20) is cylindrical; and wherein a printing cylinder driving shaft (30) which transmits drive torque is rotatably provided in the cylindrical driving-side bearing support member (20), **characterized in that** the device (1) further comprises:
   - an operating-side bearing support member (50) having an insertion portion (52) inserted in the other of the insertion holes and an attachment portion (51) fixed to a frame (43); and
   - an operating-side printing cylinder bearing (54) which is provided on at least the end of the insertion portion (52) of the operating-side bearing support member (50) and which rotatably supports the printing cylinder (10).

2. The printing cylinder device according to claim 1, **characterized in that** the end of the printing cylinder driving shaft (30) is fixed to the printing cylinder (10).

3. The printing cylinder device according to claim 1, **characterized in that** the driving-side printing cylinder bearing (24) is a bearing having an inner ring and outer ring that are axially movable relative to each other.

4. The printing cylinder device according to claim 1, **characterized in that** the operating-side printing cylinder bearing (54) is a bearing having an inner ring and outer ring that are axially movable relative to each other.

5. The printing cylinder device according to claim 3 or 4, **characterized in that** a connection portion between the printing cylinder (10) and the printing cylinder driving shaft (30) is axially movable.

6. A rotary press having the printing cylinder device according to anyone of claims 1 to 5, **characterized by** using the printing cylinder for at least one of a plate cylinder (P), a blanket cylinder (B), and an impression cylinder.

7. The rotary press according to claim 6, **characterized in that** the circumference of a printing cylinder (10) of the printing cylinder device is equal to one page of a newspaper in its longitudinal direction.

**Patentansprüche**

1. Druckzylindervorrichtung (1) **gekennzeichnet durch** das Aufweisen:

   - eines Druckzylinders (10), welcher Einführlöcher (11) an seinen beiden Endflächen aufweist;
   - eines antriebseitigen Lagertragelementes (20), welches einen Einführabschnitt (22), welcher in einem der Einführlöcher (11) eingesetzt ist, und einen an einem Rahmen befestigten Befestigungsabschnitt (21) aufweist; und
   - einer antriebseitigen Druckzylinderlagerung (24), welche zumindest am Ende des Einführabschnitts (22) des antriebseitigen Lagertragelements (20) vorgesehen ist und welches den Druckzylinder (10) drehend abstützt; wobei das antriebseitige Lagertragelement (20) zylindrisch ist; und wobei eine Zylinder-Antriebswelle (30), welche Antriebsmomente überträgt, rotierend im zylindrischen antriebseitigen Lagertragelement (20) vorgesehen ist,
   **dadurch** gekennzeichnet, dass die Vorrichtung (1) weiter aufweist:
   - ein betriebseitiges Lagertragelement (50), welches einen Einführabschnitt (52), welcher im anderen der Einführlöcher eingesetzt ist, und einen an einem Rahmen befestigten Befestigungsabschnitt (51) aufweist; und
   - eine betriebseitige Druckzylinderlagerung (54), welche zumindest am Ende des Einführabschnitts (52) des betriebseitigen Lagertragelements (50) vorgesehen ist und welches den Druckzylinder (10) drehend abstützt.

2. Druckzylindervorrichtung gemäss Anspruch 1, **dadurch gekennzeichnet, dass** das Ende der Druckzylinder-Antriebswelle (30) am Druckzylinder (10) befestigt ist.

3. Druckzylindervorrichtung gemäss Anspruch 1, **dadurch gekennzeichnet, dass** die antriebseitige Druckzylinderlagerung (24) ein Lager mit einem inneren Ring und einem äusseren Ring ist, welche axial verschiebbar zueinander sind.

4. Druckzylindervorrichtung gemäss Anspruch 1, **dadurch gekennzeichnet, dass** die betriebseitige Druckzylinderlagerung (54) ein Lager mit einem inneren Ring und einem äusseren Ring ist, welche axial verschiebbar zueinander sind.

5. Druckzylindervorrichtung gemäss Anspruch 3 oder 4, **dadurch gekennzeichnet, dass** ein Verbindungsabschnitt zwischen dem Druckzylinder (10) und dem Druckzylinder-Antriebswelle (30) axial verschiebbar ist.

6. Rotationsdruckmaschine mit der Druckzylindervorrichtung gemäss einem der Ansprüche 1 bis 5, **gekennzeichnet durch** den Gebrauch des Druckzylinders für mindestens einen Plattenzylinder (P), einen Drucktuchzylinder (B), oder einen Gegendruckzylinder.

7. Rotationsdruckmaschine gemäss Anspruch 6, **dadurch gekennzeichnet, dass** der Umfang eines Druckzylinders (10) der Druckzylindervorrichtung gleich wie eine Seite einer Zeitung in ihrer longitudinalen Richtung ist.

**Revendications**

1. Dispositif de cylindre d'impression (1) caractérisé en comprenant :

   - un cylindre d'impression (10) ayant des trous d'insertion (11) formés dans les deux faces d'extrémité de celui-ci ;
   - un élément de support de palier du côté d'entraînement (20) ayant une partie d'insertion (22) insérée dans un des trous d'insertion (11) et une partie de fixation (21) fixée à un châssis (41) ; et
   - un palier de cylindre d'impression du côté d'entraînement (24) qui est prévu sur au moins l'extrémité de la partie d'insertion (22) de l'élément de support de palier du côté d'entraînement (20) et qui supporte le cylindre d'impression (10) en rotation ;
   où l'élément de support de palier du côté d'entraînement (20) est cylindrique ; et où un arbre d'entraînement du cylindre d'impression (30) qui transmet un couple d'entraînement est prévu en rotation dans l'élément de support de palier du côté d'entraînement (20),
   **caractérisé en ce que** le dispositif (1) comprend en outre :
   - un élément de support de palier du côté de fonctionnement (50) ayant une partie d'insertion (52) insérée dans l'autre des trous d'insertion et une partie de fixation (51) fixée à un châssis (43) ; et
   - un palier de cylindre d'impression du côté de fonctionnement (54) qui est prévu sur au moins l'extrémité de la partie d'insertion (52) de l'élément de support de palier du côté de fonctionnement (50) et qui support le cylindre d'impression (10) en rotation.

2. Dispositif de cylindre d'impression selon la revendication 1, **caractérisé en ce que** l'extrémité de l'arbre d'entraînement du cylindre d'impression (30) est fixée au cylindre d'impression (10).

3. Dispositif de cylindre d'impression selon la revendication 1, **caractérisé en ce que** le palier de cylindre d'impression du côté d'entraînement (24) est un palier ayant une bague intérieure et extérieure qui sont déplaçable axialement l'une par rapport à l'autre.

4. Dispositif de cylindre d'impression selon la revendication 1, **caractérisé en ce que** le palier de cylindre d'impression du côté de fonctionnement (54) est un palier ayant une bague intérieure et extérieure qui sont déplaçable axialement l'une par rapport à l'autre.

5. Dispositif de cylindre d'impression selon l'une quelconque des revendications 3 ou 4, **caractérisé en ce qu'**une partie de connexion entre le cylindre d'impression (10) et l'arbre d'entraînement du cylindre d'impression (30) est déplaçable axialement.

6. Presse rotative ayant le cylindre d'impression selon l'une quelconque des revendications 1 à 5, caractérisé en utilisant le cylindre d'impression pour au moins l'un d'un cylindre porte-plaque (P), un cylindre porte-blanchet (B), et un cylindre d'impression.

7. Presse rotative selon la revendication 6, **caractérisé en ce que** la circonférence d'un cylindre d'impression (10) du dispositif de cylindre d'impression est égale à une page d'un journal dans sa direction longitudinale.

FIG.1A

EP 2 418 084 B1

DRIVING SIDE

OPERATING SIDE

EP 2 418 084 B1

FIG.1B

FIG.2A

EP 2 418 084 B1

DRIVING SIDE

OPERATING SIDE

FIG.2B

EP 2 418 084 B1

DRIVING SIDE

OPERATING SIDE

FIG.3A

DRIVING SIDE

OPERATING SIDE

EP 2 418 084 B1

FIG.3B

EP 2 418 084 B1

FIG. 4

FIG.5

B-B UNIT

SATELLITE-SHAPED UNIT

(a)

(b)

HORIZONTAL B-B UNIT

HORIZONTAL UNIT

(c)

(d)

FIG.6

(a)

(b)

ARCH-SHAPED TOWER UNIT

H-SHAPED TOWER UNIT

FIG.7

**EP 2 418 084 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9141826 A
- EP 0899097 A
- FR 2291402
- US 2006081140 A